# EUROPÄISCHE PATENTSCHRIFT

(11) **EP 3 187 352 B1**
(45) Veröffentlichungstag und Bekanntmachung des Hinweises auf die Patenterteilung: **03.07.2019**
(21) Anmeldenummer: 16204272.5
(22) Anmeldetag: 15.12.2016
(51) Int. Cl.: B60J 7/185, B60J 7/12

(54) **VERDECK EINES CABRIOLET-FAHRZEUGS MIT EINER BLOCKIEREINRICHTUNG ODER EINER VERZÖGERUNGSEINRICHTUNG**
ROOF OF A CONVERTIBLE VEHICLE WITH A BLOCKING DEVICE OR A DAMPING DEVICE
CAPOTE D'UN VÉHICULE CABRIOLET COMPRENANT UN DISPOSITIF DE BLOCAGE OU UN DISPOSITIF DE AMORTISSEMENT

(30) Priorität: 30.12.2015 DE 102015122991
(43) Veröffentlichungstag der Anmeldung: 05.07.2017
(73) Patentinhaber: Valmet Automotive Oy, 23500 Uusikaupunki (FI)
(72) Erfinder: Hollenbeck, Sven, 49492 Westerkappeln (DE); Selle, Heinrich, 32549 Bad Oeynhausen (DE); Plum, Rüdiger, 49152 Bad Essen (DE); Holstein, Matthias, 49586 Merzen (DE); Lehmkuhl, Marc, 49565 Bramsche (DE); Glosemeier, Ingo, 49186 Bad Iburg (DE); Wesemann, Michael, 49565 Bramsche (DE)
(74) Vertreter: Kronthaler, Wolfgang N.K.

(56) Entgegenhaltungen:
- DE-A1- 19 732 672
- DE-A1-102013 114 984
- DE-U1- 20 210 763
- DE-U1-202008 011 624
- FR-A1- 2 971 204

## Beschreibung

Die Erfindung betrifft ein Verdeck eines Cabriolet-Fahrzeugs, das mittels eines Verdeckgestänges zwischen einer offenen Position und einer geschlossenen Position verlagerbar ist, gemäß der im Oberbegriff des Patentanspruches 1 definierten Art und ein Verdeck gemäß der im Oberbegriff des Patentanspruches 11 näher definierten Art.

Aus der Praxis sind vielfältige Bauarten von Verdecken von Cabriolet-Fahrzeugen bekannt. Mittels eines Verdeckgestänges sind die Verdecke zwischen einer einen Fahrgastraum zumindest bereichsweise abdeckenden, geschlossenen Position und einer den Fahrgastraum zumindest teilweise freigebenden, offenen Position verlagerbar. Im Falle eines Crashs während einer Verlagerungsbewegung des Verdecks, d. h. in einer Fahrsituation, in der auf das Verdeck während einer Verdeckbewegung eine große, beispielsweise stoßartige, äußere Kraft wirkt, können bei entsprechender Größe der äußeren Kraft Elemente des Verdecks gegebenenfalls versagen und kann das Verdeck in einer unkontrollierten und schnellen Bewegung in Richtung seiner geschlossenen Position verlagert werden, wobei hierdurch weitere Elemente des Verdecks beschädigt werden können.

Aus der DE 197 32 672 A1 ist ein Verdeck eines Cabriolet-Fahrzeugs bekannt, das zwischen einer geschlossenen Position und einer offenen Position verlagerbar ist. An einer Konsole ist ein Federspeicher feststehend angeordnet, welcher zum Zusammenwirken mit einer Hauptsäule des Verdeckgestells ausgeführt ist. Durch den Federspeicher wird eine Bewegung der Hauptsäule in Schließrichtung des Verdecks kurz vor Erreichen ihrer der Schließstellung entsprechenden Stellung gedämpft.

Aus der DE 202 10 763 U1 ist ein verlagerbares Verdeck bekannt, wobei in einem rückwärtigen Bereich des Verdecks eine Dämpfungsvorrichtung zur Dämpfung einer Absenkbewegung einer Dachspitze derart angeordnet ist, dass sie die Winkelöffnung zwischen einem Lenker eines Totpunktgestänges und einem Spannbügel hemmt.

Aus der DE 10 2013 114 984 A1 ist weiterhin ein Cabriolet-Fahrzeug bekannt, bei dem die Bewegung eines Verdeck und eines Stoffhaltebügels unabhängig voneinander und durch eine einzige Antriebseinrichtung umsetzbar ist, wobei der hierfür vorgesehene Mechanismus eine die Verdeckbewegung unterbindende Sperreinrichtung umfasst.

Es ist Aufgabe der vorliegenden Erfindung, ein Verdeck eines Cabriolet-Fahrzeugs zu schaffen, mittels welchem eine unkontrollierte Bewegung des Verdecks in Richtung seiner geschlossenen Position in einem Crashfall auf konstruktiv einfache Weise verhinderbar ist.

Diese Aufgabe wird mit einem Verdeck gemäß den Merkmalen des Patentanspruches 1 und mit einem Verdeck gemäß den Merkmalen des Patentanspruches 11 gelöst.

Es wird somit ein Verdeck eines Cabriolet-Fahrzeugs vorgeschlagen, das mittels eines Verdeckgestänges zwischen einer offenen Position und einer geschlossenen Position verlagerbar ist, wobei erfindungsgemäß wenigstens eine Blockiereinrichtung vorgesehen ist, die zwischen einer Grundposition und einer Blockierposition verlagerbar ist, wobei bei sich in der Blockierposition befindlicher Blockiereinrichtung eine Verlagerungsbewegung des Verdecks in seine geschlossene Position verhindert bzw. blockiert ist, und wobei die Blockiereinrichtung bei Vorliegen einer äußeren, in einem Crash-Fall auf das Verdeck wirkenden Kraft, die einen vorgegebenen Grenzwert überschreitet, von der Grundposition in die Blockierposition verlagert ist.

Bei einem erfindungsgemäß ausgeführten Verdeck ist die Blockiereinrichtung derart an einem Verdeckelement gelagert, dass sie bei in einem Crashfall auf das Verdeck wirkender, äußerer Kraft bzw. Impulskraft von ihrer Grundposition in ihre Blockierposition überführt wird, in der die Blockiereinrichtung mit einem weiteren Verdeckelement bzw. mit einem Element des Cabriolet-Fahrzeugs zusammenwirkt. Dadurch, dass eine Bewegung der sich während einer Verdeckbewegung zueinander bewegenden Verdeckelemente bzw. des Verdeckelements und des Elements des Cabriolet-Fahrzeugs durch die Blockiereinrichtung in der Blockierposition unterbindbar ist, ist eine Bewegung des Verdecks ausgehend von einem Zeitpunkt, zu dem die Blockiereinrichtung mit dem weiteren Verdeckelement in Kontakt tritt, in Richtung seiner geschlossenen Position auch bei großen, auf das Verdeck wirkenden, äußeren Kräften sicher verhindert.

Bei dem erfindungsgemäßen Verdecks ist es vorgesehen, dass die Blockiereinrichtung an einem Verdeckgestängeelement des Verdeckgestänges angeordnet bzw. mit diesem verbunden ist und in der Blockierposition mit einem weiteren Verdeckgestängeelement zusammenwirkt, das während einer Verdeckbewegung gegenüber dem Verdeckgestängeelement bewegt ist. Alternativ oder zusätzlich hierzu ist eine Blockiereinrichtung an einem Verdeckgestängeelement des Verdeckgestänges angeordnet und in der Blockierposition mit einem Hauptlager des Verdecks zusammenwirkend. Wiederum alternativ oder zusätzlich hierzu ist eine Blockiereinrichtung an einem Hauptlager des Verdecks angeordnet und in der Blockierposition mit einem Verdeckgestängeelement zusammenwirkend. Eine erfindungsgemäße Blockiereinrichtung ist somit flexibel, je nach vorhandenem Bauraum, innerhalb des Verdecks anordenbar.

Bei einer konstruktiv einfachen Ausführung des erfindungsgemäßen Verdecks ist die Blockiereinrichtung stangenförmig ausgeführt, wobei die Blockiereinrichtung mit einem ersten Endbereich drehbar um einen Drehpunkt mit einem Verdeckgestängeelement oder mit dem Hauptlager des Verdecks verbunden ist, und wobei ein dem ersten Endbereich gegenüberliegender zweiter Endbereich der Blockiereinrichtung bei Auftreten einer äußeren, auf das Verdeck wirkenden Kraft, die einen vorgegebenen Grenzwert überschreitet, durch eine Massenträgheit der Blockiereinrichtung um den Drehpunkt der Blockiereinrichtung in die Blockierposition verschwenkt ist. Die Blockiereinrichtung ist dabei derart ausgeführt, dass während eines Normalbetriebs des Verdecks und einer gewünschten Überführung des Verdecks zwischen der geschlossenen Position und der offenen Position auf die Blockiereinrichtung wirkende Kräfte nicht ausreichen, um diese aus der Grundposition in Richtung der Blockierposition zu bewegen.

Eine konstruktiv einfach ausgeführte Blockiereinrichtung ist geschaffen, wenn die Blockiereinrichtung ein im Wesentlichen translatorisch verlagerbares Blockierelement aufweist, wobei das Blockierelement in der Blockierposition eine Ausnehmung eines mit einem Verdeckgestängeelement oder mit einem Hauptlager verbundenen Elements zumindest bereichsweise durchdringt. Das Element ist beispielsweise als Kreisscheibe bzw. in Fahrtrichtung gebogenes Element mit einer Ausnehmung ausgeführt, wobei das Blockierelement in der Blockierposition durch ein Zusammenwirken mit dem Element eine weitere Drehbewegung des Verdeckelements, mit dem die Blockiereinrichtung verbunden ist, gegenüber dem Verdeckgestängeelement oder dem Hauptlager blockiert, so dass hierdurch eine Überführung des Verdecks in seine geschlossene Position verhindert ist.

Um zu verhindern, dass die Blockiereinrichtung in der Blockierposition in unerwünschter Weise in die Grundposition überführt wird, kann die Blockiereinrichtung mit einer beispielsweise als Rasteinrichtung ausgebildeten Sicherungseinrichtung ausgeführt sein, mittels welcher die in der Blockierposition befindliche Blockiereinrichtung sicher in der Blockierposition gehalten ist.

Bei einer vorteilhaften Ausführung des erfindungsgemäßen Verdecks ist die Blockiereinrichtung im Bereich einer Dachspitze des Verdecks angeordnet, wobei ein Blockierelement der Blockiereinrichtung in der Blockierposition über die Dachspitze in Fahrzeuglängsrichtung nach vorne hinausragt. Das Blockierelement verhindert bei einer den definierten Grenzwert überschreitenden, auf das Verdeck wirkenden Kraft eine Bewegung des Verdecks in die geschlossene Position, da das Blockierelement in der Blockierposition vor Erreichen der geschlossenen Verdeckposition beispielsweise in Fahrzeughochrichtung von oben insbesondere in Wirkverbindung mit einem Windschutzscheibenrahmen, einer Windschutzscheibe oder A-Säulen des Cabriolet-Fahrzeugs kommt und hierdurch eine Bewegung des Verdecks in seine geschlossene Position unterbunden ist.

Um die Blockiereinrichtung in einem Normalbetrieb des Verdeck sicher in ihrer Grundposition zu halten und eine unerwünschte Überführung in die Blockierposition mit einer damit einhergehenden Blockierung der Verdeckbewegung sicher zu unterbinden, ist bei einer vorteilhaften Ausführung eines erfindungsgemäßen Verdecks eine Federeinrichtung vorgesehen, die die Blockiereinrichtung bzw. das Blockierelement mit einer in Richtung der Grundposition wirkenden Kraft beaufschlagt. Eine Federkraft der Federeinrichtung ist insbesondere derart gewählt, dass die Blockiereinrichtung einerseits in einem Normalbetrieb sicher in der Grundposition gehalten ist und andererseits bei einer äußeren, den definierten Grenzwert überschreitenden Kraft, die auf das Verdeck wirkt, zuverlässig in ihrer Blockierposition überführt wird.

Bei einer konstruktiv einfachen Ausführung der Erfindung ist die Blockiereinrichtung im Bereich eines Drehpunkts des Verdecks jeweils mit einem Verdeckelement, beispielsweise mit dem Hauptlager und einem Verdeckgestängeelement oder mit zwei Verdeckgestängeelementen, verbunden und weist ein Drehelement und ein Blockierelement auf, wobei das Blockierelement bei Auftreten einer äußeren, auf das Verdeck wirkenden Kraft, die einen vorgegebenen Grenzwert überschreitet, in Eingriff mit dem Drehelement ist und eine Drehbewegung des Drehelements unterbindet. Die Blockiereinrichtung ist insbesondere in der Bauart eines sogenannten Gurtaufrollers ausgebildet, wobei eine Drehbewegung der Verdeckelemente zueinander bei einem ausreichend großen, im Bereich des Drehpunkts wirkenden Drehmoment, wie es in einem Crashfall vorliegt, unterbunden ist. Eine derartige Blockiereinrichtung kann beispielsweise in einem Drehpunkt angeordnet sein, in dem eine Hauptsäule bzw. ein Hauptlenker des Verdeckgestänges an einem Hauptlager des Verdecks angebunden ist.

Es wird weiterhin ein Verdeck eines Cabriolet-Fahrzeugs vorgeschlagen, das mittels eines Verdeckgestänges zwischen einer offenen Position und einer geschlossenen Position verlagerbar ist, wobei erfindungsgemäß wenigstens eine als Hydraulikdämpfer ausgeführte Verzögerungseinrichtung vorgesehen ist, wobei der Hydraulikdämpfer einenends mit einem Verdeckgestängeelement und andernends mit einem weiteren, während einer Verdeckbewegung gegenüber dem Verdeckgestängeelement bewegten Verdeckgestängeelement oder mit einem Hauptlager des Verdecks verbunden ist, wobei Endbereiche der Verzögerungseinrichtung in einem Regelbetrieb des Verdecks ohne oder mit lediglich geringem Widerstand aufeinander zu oder auseinander bewegt werden, und wobei die Verzögerungseinrichtung bei Vorliegen einer äußeren, in einem Crash-Fall auf das Verdeck wirkenden Kraft, die einen definierten Grenzwert überschreitet, eine Verlagerungsbewegung des Verdecks von seiner offenen Position in Richtung seiner geschlossenen Position entgegen der äußeren Kraft verzögert bzw. dämpft.

Ein erfindungsgemäß ausgeführtes Verdeck hat den Vorteil, dass durch das Vorsehen der Verzögerungseinrichtung, die derart an einem Verdeckelement gelagert ist, dass sie bei einer bei einem Crash auftretenden, auf das Verdeck wirkenden, äußerer Kraft bzw. Impulskraft, die einen vorgegebenen Grenzwert überschreitet, eine durch die äußere Kraft verursachte Bewegung des Verdecks in Richtung ihrer geschlossenen Position verzögert bzw. dämpft, so dass eine unkontrollierte Bewegung des Verdecks in seine geschlossene Position auch bei großen, auf das Verdeck wirkenden, äußeren Kräften und gegebenenfalls dem Versagen von anderen Verdeckelementen sicher verhindert ist.

Bei einer konstruktiv einfachen Ausführung des erfindungsgemäßen Verdecks ist die Verzögerungseinrichtung als Hydraulikdämpfer bzw. Schwingungsdämpfer ausgeführt, der einenends mit einem Verdeckgestängeelement und andernends mit einem weiteren während einer Verdeckbewegung gegenüber dem Verdeckgestängeelement bewegten Verdeckgestängeelement oder mit einem Hauptlager des Verdecks verbunden ist. Mit einer solchen Verzögerungseinrichtung ist auf einfache Weise erzielbar, dass eine Bewegung des Verdecks in einem Normalbetrieb nicht oder nahezu nicht behindert wird und eine schnelle Bewegung des Verdecks in einem Crashfall sicher verzögert wird.

Sowohl die in den Patentansprüchen angegebenen Merkmale als auch die in den nachfolgenden Ausführungsbeispielen des erfindungsgemäßen Verdecks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Verdecks ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine vereinfachte, dreidimensionale Ansicht eines Cabriolet-Fahrzeugs mit einem in geschlossener Position gezeigten Verdeck;
- Fig. 2: eine vereinfachte Ansicht eines Ausschnitts des Verdecks der Fig. 1, wobei eine stark vereinfacht gezeigte Blockiereinrichtung in einer Grundposition ist;
- Fig. 3: eine der Fig. 2 entsprechende Ansicht des Verdecks, wobei die Blockiereinrichtung in einer Blockierposition gezeigt ist;
- Fig. 4: eine vereinfachte Ansicht einer alternativ ausgeführten Blockiereinrichtung mit einem Blockierelement, wobei die Blockiereinrichtung in ihrer Grundposition gezeigt ist;
- Fig. 5: eine der Fig. 4 entsprechende Ansicht des Verdecks, wobei die Blockiereinrichtung in einer Blockierposition dargestellt ist;
- Fig. 6: eine vereinfachte Ansicht einer weiteren, alternativ ausgeführten Blockiereinrichtung, wobei die Blockiereinrichtung in ihrer Grundposition gezeigt ist;
- Fig. 7: eine der Fig. 6 entsprechende Ansicht des Verdecks, wobei die Blockiereinrichtung in einer Blockierposition dargestellt ist;
- Fig. 8: eine vereinfachte Ansicht einer weiteren, alternativ ausgeführten Blockiereinrichtung, die in einem Drehpunkt angeordnet ist, in dem eine Hauptsäule drehbar an einem Hauptlager angebunden ist;
- Fig. 9: eine stark schematisierte Ansicht der Blockereinrichtung gemäß Fig. 8 in Alleinstellung;
- Fig. 10: eine vereinfachte Ansicht einer weiteren, alternativ ausgeführten Blockiereinrichtung, die im Bereich einer Dachspitze des Verdeck angeordnet und in ihrer Grundposition gezeigt ist;
- Fig. 11: eine der Fig. 10 entsprechende Ansicht des Verdecks, wobei die Blockiereinrichtung in einer Blockierposition dargestellt ist;
- Fig. 12: eine vereinfachte Ansicht eines Verdecks mit einer einenends hauptlagerfest und andernends an einer Hauptsäule angeordneten Verzögerungseinrichtung.

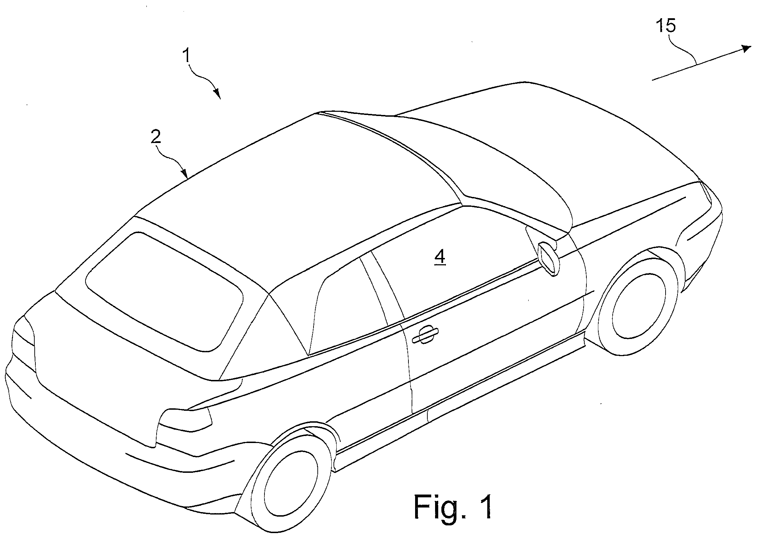

Fig. 1 zeigt ein Verdeck 2 eines Cabriolet-Fahrzeugs 1, welches vorliegend als Soft-Top-Verdeck ausgebildet ist, aber bei einer alternativen Ausführung der Erfindung auch als Hard-Top-Verdeck ausgeführt sein kann. Das Verdeck 2 ist mittels eines Verdeckgestänges 3 zwischen der in Fig. 1 gezeigten geschlossenen Position, in der das Verdeck 2 einen Fahrgastraum 4 überspannt, und einer nicht näher ersichtlichen, in einem heckseitigen Ablageraum verstauten, offenen Position, in welcher der Fahrgastraum 4 zumindest teilweise freigegeben ist, verlagerbar.

Das Verdeckgestänge 3 ist hierbei von einer nicht näher ersichtlichen Antriebseinrichtung zwischen der offenen Position und der geschlossenen Position verlagerbar, wobei die Antriebseinrichtung mit einem Elektromotor ausgeführt oder hydraulisch betätigbar sein kann.

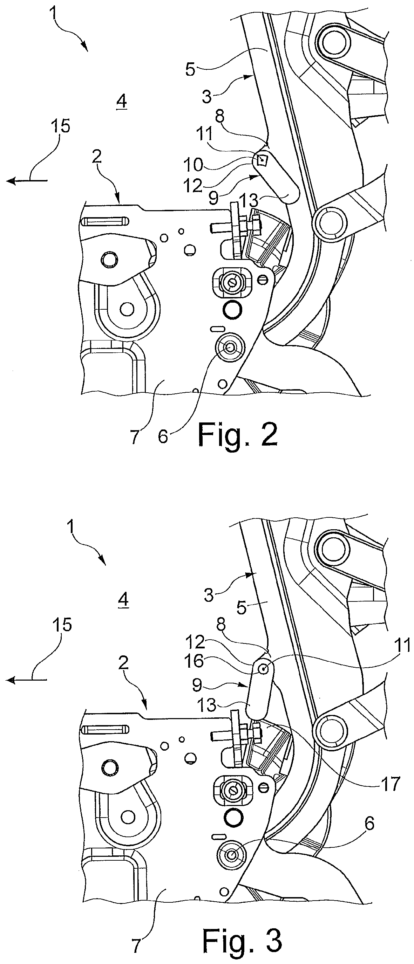

In Fig. 2 und Fig. 3 ist jeweils eine Hauptsäule 5 des Verdeckgestänges 3 näher ersichtlich, wobei sich das Verdeck 2 in einer Zwischenposition zwischen der geschlossenen Position und der offenen Position befindet. Die Hauptsäule 5 ist um einen Drehpunkt 6 drehbar an einem Hauptlager 7 des Verdecks 2 gelagert und weist vorliegend eine Vorkragung 8 auf, in deren Bereich eine stangenförmig ausgeführte Blockiereinrichtung 9 mit einem ersten Endbereich 12 in einem Drehpunkt 11 drehbar mit der Hauptsäule 5 verbunden ist.

Es ist weiterhin eine nur schematisch gezeigte Federeinrichtung 10 vorgesehen, wobei eine Federkraft der Federeinrichtung 10 die Blockiereinrichtung 9 in ihrer in Fig. 3 gezeigten Grundposition hält. In der Grundposition der Blockiereinrichtung 9 liegt die Blockiereinrichtung 9 insbesondere an der Hauptsäule 5 an und benötigt somit lediglich einen geringen Bauraum.

In Fig. 3 ist die Blockiereinrichtung 9 in einer Blockierposition gezeigt, in der die Blockiereinrichtung 9 gegenüber ihrer Grundposition mit ihrem ersten Endbereich 12 um den Drehpunkt 11 verschwenkt ist, wobei ein dem ersten Endbereich 12 abgewandter, zweiter Endbereich 13 der Blockiereinrichtung 9 hierbei in Fahrzeuglängsrichtung bzw. in Fahrtrichtung 15 nach vorne verschwenkt ist. Um die Blockiereinrichtung 9 definiert und sicher in ihrer Blockierposition zu halten, ist eine in Fig. 3 stark schematisierte Rasteinrichtung 16 vorgesehen, mittels welcher die Blockiereinrichtung 9 entgegen einer Bewegung in Richtung der Grundposition in ihrer Blockierposition gehalten ist.

Eine Verlagerung der Blockiereinrichtung 9 zwischen der Grundposition und der Blockierposition findet statt, wenn eine äußere, insbesondere bei einem Crash auf das Verdeck 2 wirkende Kraft einen eine Federkraft der Federeinrichtung 10 übersteigenden Wert annimmt, so dass die Blockiereinrichtung 9 durch die Massenträgheit in ihre Blockierposition verlagert wird. Bei einem Normalbetrieb des Verdecks 2 reicht die Federkraft der Federeinrichtung 10 aus, die Blockiereinrichtung 9 sicher in ihrer Grundposition zu halten. Der definierte Grenzwert, den die äußere, auf das Verdeck 2 wirkende Kraft überschreiten muss, um die Blockiereinrichtung 9 von der Grundposition in die Blockierposition zu verlagern, ist beispielsweise um mehr als ein Faktor von 100 größer als die Kräfte, die bei einer regulären Überführung des Verdecks 2 zwischen der geschlossenen Position und der offenen Position auf das Verdeck 2 wirken.

Wie in Fig. 3 gezeigt ist, wirkt der zweite Endbereich 13 der Blockiereinrichtung 9 in der Blockierposition vorliegend mit einem Bereich 17 des Hauptlagers 7 zusammen und verhindert, dass die Hauptsäule 5 bei sich in der Zwischenposition befindlichem Verdeck 2 gemäß Fig. 3 entgegen dem Uhrzeigersinn um den Drehpunkt 6 verdreht werden kann. Durch die Unterbindung einer weiteren Bewegung der Hauptsäule 5 in Richtung ihrer Position bei geschlossenem Verdeck 2 wird auch eine Bewegung des Verdecks 2 insgesamt in Richtung seiner geschlossenen Position verhindert.

Durch die Blockiereinrichtung 9 ist somit sicher verhindert, dass das Verdeck 2 in einem Crashfall während einer Verdecköffnungs- bzw. -schließbewegung entgegen der dabei auf das Verdeck 2 wirkenden, äußeren Kraft in unkontrollierter Weise in seine geschlossene Position überführt wird. Eine Beschädigung des Verdecks 2 ist hierdurch sicher verhindert.

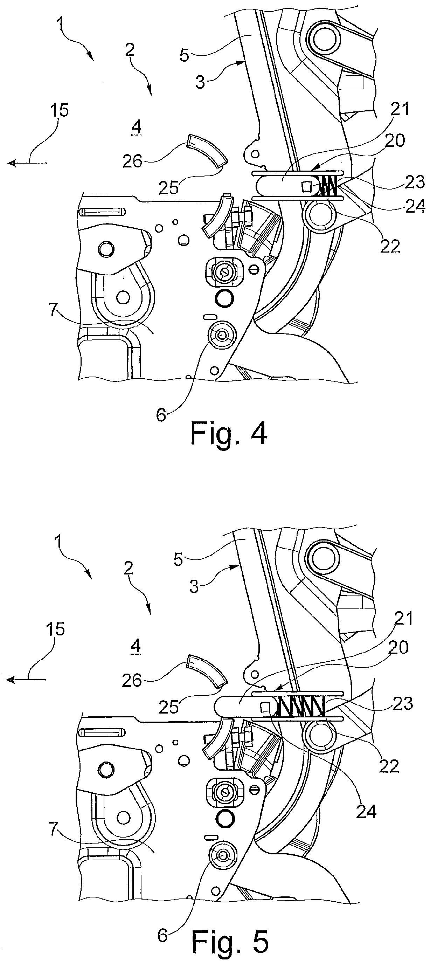

Fig. 4 und Fig. 5 zeigen eine alternative Ausführung einer Blockiereinrichtung 20, die mit einem stangenförmigen bzw. bolzenförmigen Blockierelement 21 ausgebildet ist. Das Blockierelement 21 ist über eine fest mit der Hauptsäule 5 verbundene, eine Führungsbahn für das Blockierelement 21 ausbildende Führungseinrichtung 22 translatorisch zwischen der in Fig. 4 gezeigten Grundposition und der in Fig. 5 gezeigten Blockierposition verlagerbar.

Es ist wiederum eine Federeinrichtung 23 vorgesehen, die auf das Blockierelement 21 eine das Blockierelement 21 in ihrer Grundposition haltende Federkraft ausübt, die derart gewählt ist, dass das Blockierelement 21 in einem Normalbetrieb des Verdecks 2 sicher in der Grundposition gehalten ist.

Übersteigt eine äußere, auf das Verdeck 2 wirkende Kraft beispielsweise in einem Crashfall einen definierten Grenzwert, so dass auf das Blockierelement 21 eine die Federkraft der Federeinrichtung 2 übersteigende Kraft wirkt, die in der Ausführung gemäß Fig. 4 und Fig. 5 im Wesentlichen in Fahrtrichtung 15 nach vorne gerichtet ist, wird das Blockierelement 21 durch die Massenträgheit entlang der von der Führungseinrichtung 22 vorgegebenen Führungsbahn vorliegend im Wesentlichen translatorisch in Fahrtrichtung 15 nach vorne in seine Blockierposition überführt. Es ist wiederum eine Rasteinrichtung 24 vorgesehen, die das Blockierelement 21 sicher entgegen einer Bewegung in Richtung der Grundposition in der Blockierposition hält.

In der Blockierposition des Blockierelements 21 durchgreift das Blockierelement 21 eine Ausnehmung 25 eines in Fahrtrichtung 15 gebogenen Elements 26, das vorliegend fest mit dem Hauptlager 7 verbunden ist. In die Ausnehmung 25 durchgreifender Blockierposition des Blockierelements 21 ist gemäß der Ausführung nach Fig. 5 ausgehend von der in Fig. 5 dargestellten Situation lediglich eine geringfügige Bewegung der Hauptsäule 5 entgegen dem Uhrzeigersinn in Richtung seiner Position bei geschlossenem Verdeck 2 möglich, bevor das Blockierelement 21 in Anlage mit dem Element 26 kommt und eine weitere Bewegung der Hauptsäule 5 und somit des Verdecks 2 in Richtung der geschlossenen Position verhindert ist.

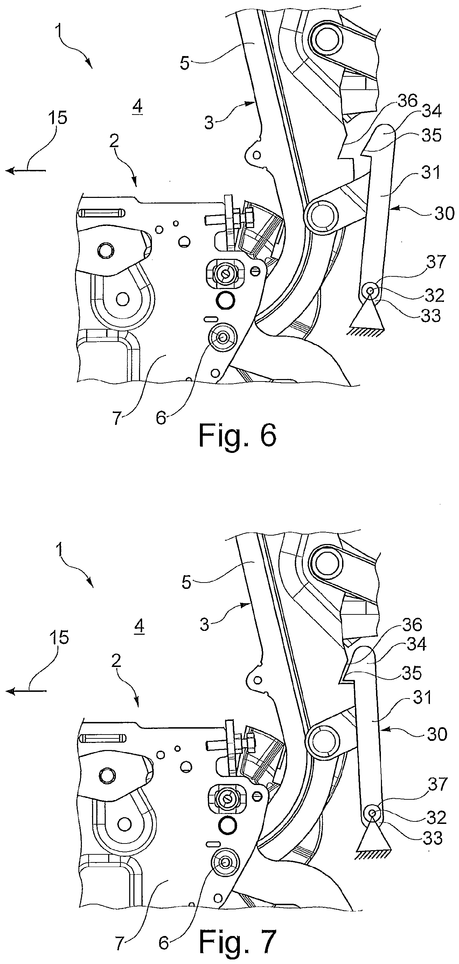

Eine weitere alternative Ausführung einer Blockiereinrichtung 30 mit einem stangenförmig ausgeführten Blockierelement 31 ist in Fig. 6 und Fig. 7 gezeigt. Das Blockierelement 31 ist vorliegend mit einem ersten Endbereich 33 um einen hauptlagerfesten Drehpunkt 32 drehbar gelagert, kann bei einer alternativen Ausführung der Erfindung aber auch um einen karosseriefesten Drehpunkt drehbar gelagert sein.

Im Bereich eines dem ersten Endbereich 33 abgewandten, zweiten Endbereichs 34 weist das Blockierelement 31 vorliegend ein hakenförmig ausgeführtes Verriegelungselement 35 auf, welches zum Zusammenwirken mit einer Ausnehmung 36 der Hauptsäule 5 vorgesehen ist, die ebenfalls ein Verriegelungselement 36 darstellt.

In Fig. 6 ist das Blockierelement 31 der Blockiereinrichtung 30 in seiner Grundposition gezeigt, in der das Blockierelement 31 durch eine nur schematisch gezeigte Federeinrichtung 37 gehalten ist, so dass das Blockierelement 31 im Normalbetrieb des Verdecks 2 in der in Fig. 6 gezeigten Grundposition gehalten ist. Alternativ hierzu kann es auch vorgesehen sein, dass das Blockierelement im Normalbetrieb außer Eingriff mit der Ausnehmung mit der Hauptsäule 5 mitbewegt wird.

Wirkt auf das Blockierelement 31 insbesondere in einem Crashfall eine äußere Kraft, die eine Federkraft der Federeinrichtung 37 übersteigt, wird das Blockierelement 31 mit seinem zweiten Endbereich 34 durch die Massenträgheit entgegen der Federkraft der Federeinrichtung 37 in Fahrrichtung 15 nach vorne verlagert, bis das Blockierelement 31 in Eingriff mit dem Verriegelungselement 36 der Hauptsäule 5 kommt. In der Blockierposition des Blockierelements 31 wirken die Verriegelungselemente 35, 36 derart zusammen, dass eine weitere Bewegung der Hauptsäule 5 und somit des gesamten Verdecks 2 in Richtung seiner geschlossenen Position sicher unterbunden ist. Bei einer alternativen Ausführung der Erfindung kann eine Rasteinrichtung vorgesehen sein, die das Blockierelement 31 entgegen einer Bewegung in Richtung seiner Grundposition in der Blockierposition hält.

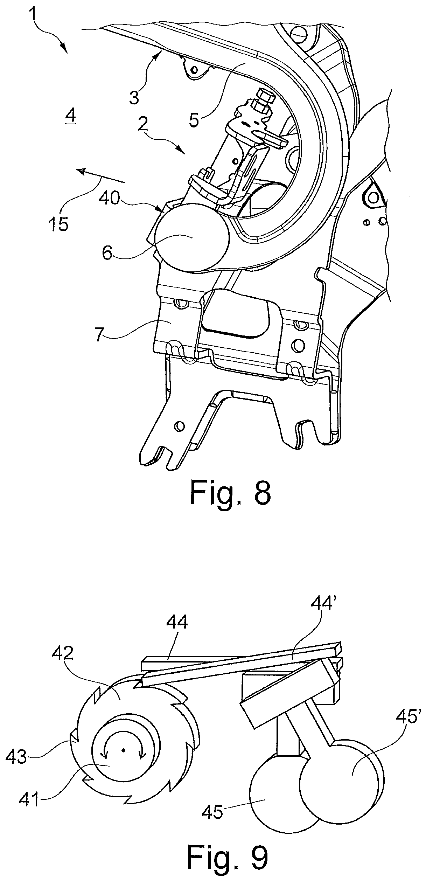

Eine weitere, alternative Ausführung einer Blockiereinrichtung 40 ist in Fig. 8 und Fig. 9 gezeigt. Die in Fig. 8 lediglich stark schematisiert gezeigte Blockiereinrichtung 40 ist hier im Bereich des Drehpunkts 6 der Hauptsäule 5 an dem Hauptlager 7 angeordnet. Die Blockiereinrichtung 40 ist in der Bauart eines Gurtaufrollers ausgeführt und weist ein fest mit dem Hauptlager 7 verbundenes Drehelement 41 und ein fest mit der Hauptsäule 5 verbundenes Drehelement 42 auf, das mit einer Vielzahl von umfangsseitig angeordneten Rastelementen 43 ausgeführt ist, so dass das Drehelement 42 einen Zahnkranz bildet. Es sind weiterhin ein stangenförmiges Element 44 und ein Pendelelement 45 vorgesehen, wobei das Pendelelement 45 bei einer äußeren, auf das Pendelelement 45 wirkenden Kraft, die einen definierten Grenzwert überschreitet, von einer Grundposition 45 in eine Wirkposition 45' verlagert ist, wobei das stangenförmige Element 44 hierdurch von einer außer Eingriff mit den Rastelementen 43 befindlichen Position 44 in eine in Eingriff mit einem Rastelement 43 befindliche Position 44' gebracht wird. Hierdurch ist, zumindest solange die äußere Kraft den definierten Grenzwert überschreitet, eine Drehbewegung der Hauptsäule 5 gegenüber dem Hauptlager 7 und somit eine Verlagerungsbewegung des Verdecks 2 in Richtung seiner geschlossenen Position unterbunden.

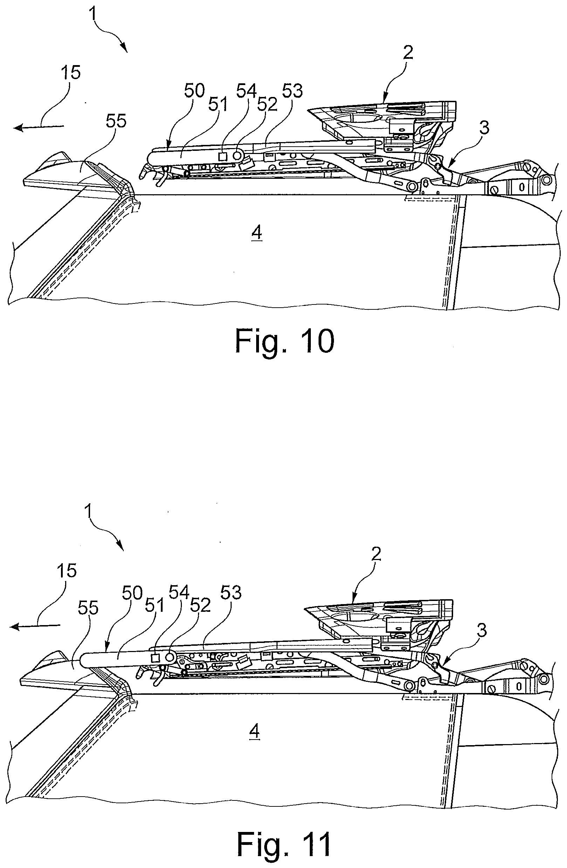

Eine vom Aufbau der Blockiereinrichtung 20 im Wesentlichen entsprechende Blockiereinrichtung 50 ist in Fig. 10 und Fig. 11 gezeigt. Die Blockiereinrichtung 50 weist wiederum ein beispielsweise durch eine nicht näher gezeigte Führungseinrichtung im Wesentlichen translatorisch verlagerbares Blockierelement 51 auf, das im Bereich einer Dachspitze 53 des Verdecks 2 angeordnet ist, wobei das Blockierelement 51 in der Grundposition im Wesentlichen innerhalb einer von der Dachspitze 53 gebildeten Außenkontur angeordnet ist und in Fahrtrichtung 15 nicht über die Dachspitze 53 hinausragt. Über eine schematisch gezeigte Federeinrichtung 52 wirkt auf das Blockierelement 51 eine das Blockierelement 51 in seiner Grundposition haltende Federkraft.

Übersteigt eine äußere, auf das Blockierelement 51 wirkende Kraft beispielsweise im Fall eines Crashs die Federkraft der Federeinrichtung 52, wird das Blockierelement 51 in seine in Fig. 11 gezeigte Blockierposition verlagert, in der das Blockierelement 51 über eine schematisch ersichtliche Rasteinrichtung 54 entgegen einer Bewegung in Richtung seiner Grundposition sicher in der Blockierposition gehalten ist.

Bei sich in der Blockierposition befindlichem Blockierelement 51 ist eine Überführung des Verdecks 2 in seine geschlossene Position sicher verhindert, da das Blockierelement 51 vor Erreichen der geschlossenen Verdeckposition vorliegend mit einem Windschutzscheibenrahmen 55 des Cabriolet-Fahrzeugs 1 in Kontakt kommt und eine weitere Bewegung des Verdecks 2 in Richtung seiner geschlossenen Position sicher verhindert.

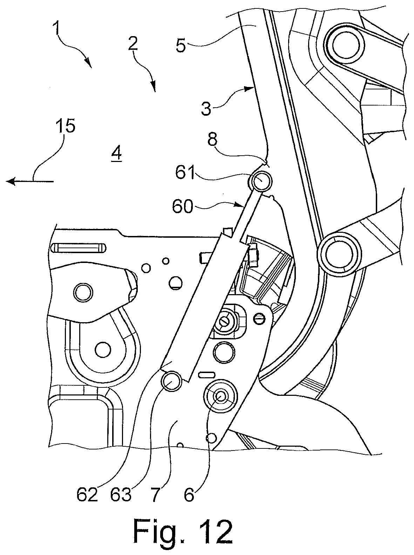

Fig. 12 zeigt eine der Fig. 3 und Fig. 4 entsprechende Ansicht des Verdecks 2, wobei statt der Blockiereinrichtung 9 eine in der Art einer Zylinder-Kolben-Einheit ausgeführte Verzögerungseinrichtung 60 vorgesehen ist, die vorliegend einen ölhydraulischen Schwingungsdämpfer darstellt. Die Verzögerungseinrichtung 60 ist vorliegend mit einem ersten Endbereich 61 drehbar im Bereich der Vorkragung 8 der Hauptsäule 5 angebunden. Ein dem ersten Endbereich 61 abgewandter, zweiter Endbereich 62 der Verzögerungseinrichtung 60 ist in einem Drehpunkt 63 drehbar mit dem Hauptlager 7 verbunden.

Im Normalbetrieb bzw. Regelbetrieb des Verdecks 2 werden die Endbereiche 61, 62 der Verzögerungseinrichtung 60 ohne oder mit lediglich einem geringen Widerstand aufeinander zu bzw. auseinander bewegt. Wirkt jedoch beispielsweise bei einem Crash eine große, äußere Kraft auf das Verdeck 2, die die Hauptsäule 5 bzw. das Verdeck 2 in Richtung seiner geschlossenen Position zu bewegen ersucht, dämpft bzw. verzögert die Verzögerungseinrichtung 60 eine derartige Bewegung der Hauptsäule 5 durch eine Umwandlung von Bewegungsenergie in Wärmeenergie im Bereich von definiert wählbaren Drosselstellen der Verzögerungseinrichtung 60, wobei im Bereich der Verzögerungseinrichtung 60 generierte, einer Bewegung der Endbereiche 61, 62 zueinander entgegengesetzte Dämpfkräfte abhängig von einer Bewegungsgeschwindigkeit der Endbereiche 61, 62 zueinander sind. Schnellere Bewegungen der Endbereiche 61, 62 zueinander führen dabei zu größeren Dämpfkräften der Verzögerungseinrichtung 60, wobei bei entsprechend großer, auf das Verdeck 2 wirkender, äußerer Kraft, eine Bewegung der Hauptsäule 5 durch die Verzögerungseinrichtung 60 gegebenenfalls zumindest zeitweise komplett blockiert sein kann.

Durch die Verzögerung der Bewegung der Hauptsäule 5 wird auch eine Bewegung des Verdecks 2 in gewünschtem Umfang verzögert. Hierdurch wird sicher verhindert, dass das Verdeck 2 mit unerwünscht großer Geschwindigkeit in seine geschlossene Position überführt wird.

## Patentansprüche

1. Verdeck (2) eines Cabriolet-Fahrzeugs (1), das mittels eines Verdeckgestänges (3) zwischen einer offenen Position und einer
geschlossenen Position verlagerbar ist, wobei wenigstens eine Blockiereinrichtung (9, 20, 30, 40, 50) vorgesehen ist, welche an einem Verdeckgestängeelement des Verdeckgestänges angeordnet ist und in der Blockierposition mit einem weiteren Verdeckgestängeelement, das während einer Verdeckbewegung gegenüber dem Verdeckgestängeelement bewegt ist, oder mit einem Hauptlager (7) des Verdecks (2) zusammenwirkt, oder welche an einem Hauptlager des Verdecks angeordnet ist und in der Blockierposition mit einem Verdeckgestängeelement zusammenwirkt, wobei die Blockiereinrichtung (9, 20, 30, 40, 50) zwischen einer Grundposition und einer Blockierposition verlagerbar ist, wobei bei sich in der Blockierposition befindlicher Blockiereinrichtung (9, 20, 30, 40, 50) eine Verlagerungsbewegung des Verdecks (2) in seine
geschlossene Position verhindert ist, **dadurch gekennzeichnet, dass** die Blockiereinrichtung (9, 20, 30, 40, 50) bei Vorliegen einer äußeren, in einem Crash-Fall auf das Verdeck (2) wirkenden Kraft, die einen vorgegebenen Grenzwert überschreitet, von der Grundposition in die Blockierposition verlagert ist.

2. Verdeck nach Anspruch 1, **dadurch gekennzeichnet, dass** die Blockiereinrichtung (9, 30, 40, 50) stangenförmig ausgeführt ist und mit einem ersten Endbereich (12, 33) drehbar um einen Drehpunkt (11, 32) mit einem Verdeckgestängeelement (5) oder mit dem Hauptlager (7) des Verdecks (2) verbunden ist, wobei ein dem ersten Endbereich (12, 33) gegenüberliegender zweiter Endbereich (13, 34) der Blockiereinrichtung (9, 30, 40, 50) bei Auftreten einer äußeren, auf das Verdeck (2) wirkenden Kraft, die einen vorgegebenen Grenzwert überschreitet, durch die Massenträgheit um den Drehpunkt (11, 32) verschwenkt ist.

3. Verdeck nach einem der Ansprüche 1 oder 2, **dadurch gekennzeichnet, dass** die Blockiereinrichtung (20) ein im Wesentlichen translatorisch verlagerbares Blockierelement (21) aufweist, wobei das Blockierelement (21) in der Blockierposition eine Ausnehmung (25) eines mit einem Verdeckgestängeelement oder mit einem Hauptlager (7) verbundenen Elements (26) zumindest bereichsweise durchdringt.

4. Verdeck nach einem der Ansprüche 1 bis 3, **dadurch gekennzeichnet, dass** die Blockiereinrichtung (9, 20, 30, 40, 50) mit einer Sicherungseinrichtung (16, 24, 54) ausgeführt ist, mittels welcher die in der Blockierposition befindliche Blockiereinrichtung (9, 20, 30, 40, 50) in der Blockierposition gehalten ist.

5. Verdeck nach einem der Ansprüche 1 bis 4, **dadurch gekennzeichnet, dass** die Blockiereinrichtung (50) im Bereich einer Dachspitze (53) des Verdecks (2) angeordnet ist, wobei ein Blockierelement (51) der Blockiereinrichtung (50) in der Blockierposition über die Dachspitze (53) in Fahrzeuglängsrichtung (15) nach vorne hinausragt.

6. Verdeck nach einem der Ansprüche 1 bis 5, **dadurch gekennzeichnet, dass** die Blockiereinrichtung (9, 20, 30, 40, 50) eine Federeinrichtung (10, 23, 37, 52) aufweist, die die Blockiereinrichtung (9, 20, 30, 40, 50) bzw. das Blockierelement (21, 31, 51) mit einer in Richtung der Grundposition wirkenden Kraft beaufschlagt.

7. Verdeck nach einem der Ansprüche 1 bis 6, **dadurch gekennzeichnet, dass** die Blockiereinrichtung (40) im Bereich eines Drehpunkts (6) des Verdecks (2) jeweils mit einem Verdeckelement (5, 7) verbunden ist und ein Drehelement (42) und ein Blockierelement (44) aufweist, wobei das Blockierelement (44) bei Auftreten einer äußeren, auf das Verdeck (2) wirkenden Kraft, die einen vorgegebenen Grenzwert überschreitet, in Eingriff mit dem Drehelement (42) ist und eine Drehbewegung des Drehelements (42) unterbindet.

8. Verdeck (2) eines Cabriolet-Fahrzeugs (1), das mittels eines Verdeckgestänges (3) zwischen einer offenen Position und einer
geschlossenen Position verlagerbar ist, wobei wenigstens eine als Hydraulikdämpfer ausgeführte Verzögerungseinrichtung (60) vorgesehen ist, wobei der Hydraulikdämpfer (60) einenends mit einem Verdeckgestängeelement (5) und andernends mit einem weiteren, während einer Verdeckbewegung gegenüber dem Verdeckgestängeelement (5) bewegten Verdeckgestängeelement oder mit einem Hauptlager (7) des Verdecks (2) verbunden ist,
**dadurch gekennzeichnet, dass** Endbereiche (61, 62) der Verzögerungseinrichtung (60) in einem Regelbetrieb des Verdecks (2) ohne oder mit lediglich geringem Widerstand aufeinander zu oder auseinander bewegt werden, und wobei die Verzögerungseinrichtung (60) bei Vorliegen einer äußeren, in einem Crash-Fall auf das Verdeck (2) wirkenden Kraft, die einen definierten Grenzwert überschreitet, eine Verlagerungsbewegung des Verdecks (2) von seiner offenen Position in Richtung seiner geschlossenen Position entgegen der äußeren Kraft verzögert.

9. Verdeck nach Anspruch 8, **dadurch gekennzeichnet, dass** die Verzögerungseinrichtung (60) als Schwingungsdämpfer ausgeführt ist.

## Claims

1. A hood (2) for a convertible vehicle (1), which is displaceable between an open position and a closed position by means of a hood linkage (3), wherein
at least one blocking means (9, 20, 30, 40, 50) is provided, which is arranged on a hood linkage element of the hood linkage and, in the blocking position, cooperates either with another hood linkage element being moved with respect to said hood linkage element during a hood movement, or with a main bearing (7) of the hood (2), or which is arranged on a main bearing of the hood and, in the blocking position, cooperates with a hood linkage element, wherein the blocking means (9, 20, 30, 40, 50) is displaceable between a basic position and a blocking position,
wherein the blocking means (9, 20, 30, 40, 50) arranged in the blocking position prevents a displacement of the hood (2) to its closed position,
**characterised in that**
the blocking means (9, 20, 30, 40, 50) is displaced from the basic position to the blocking position when an external force acting on the hood (2) in a crash and exceeding a specified limit is present.

2. The hood according to claim 1, **characterised in that the** blocking means (9, 30, 40, 50) is rod-shaped and has a first end region (12, 33) connected either to a hood linkage element (5) so as to be rotatable about a pivot point (11, 32) or to the main bearing (7) of the hood (2), wherein a second end region (13, 34) of the blocking means (9, 30, 40, 50) opposite the first end region (12, 33) is pivoted about the pivot point (11, 32) due to inertia when an external force acting on the hood (2) and exceeding a specified limit is present.

3. The hood according to any one of claims 1 or 2, **characterised in that** the blocking means (20) comprises a blocking element (21), which is displaceable in a substantially translational manner, wherein the blocking element (21), in the blocking position, passes at least partly through a recess (25) of an element (26) connected either to a hood linkage element or to a main bearing (7).

4. The hood according to any one of claims 1 to 3, **characterised in that** the blocking means (9, 20, 30, 40, 50) is provided with a securing means (16, 24, 54), by means of which the blocking means (9, 20, 30, 40, 50) arranged in the blocking position is held in the blocking position.

5. The hood according to any one of claims 1 to 4, **characterised in that** the blocking means (50) is arranged in the area of a roof header (53) of the hood (2), wherein, in the blocking position, a blocking element (51) of the blocking means (50) protrudes forward from the roof header (53) in the longitudinal vehicle direction (15).

6. The hood according to any one of claims 1 to 5, **characterised in that** the blocking means (9, 20, 30, 40, 50) is provided with a spring device (10, 23, 37, 52), which respectively subjects the blocking means (9, 20, 30, 40, 50) or the blocking element (21, 31, 51) to a force acting in the direction of the basic position.

7. The hood according to any one of claims 1 to 6, **characterised in that** the blocking means (40) is connected to a respective hood element (5, 7) in the area of a pivot point (6) of the hood (2) and comprises both a rotary element (42) and a blocking element (44), wherein the blocking element (44), in the presence of an external force acting on the hood (2) and exceeding a specified limit, is in engagement with the rotary element (42) and prevents a rotary motion of the rotary element (42).

8. A hood (2) for a convertible vehicle (1), which is displaceable between an open position and a closed position by means of a hood linkage (3), wherein at least one delaying means (60) configured as a hydraulic damper is provided, said hydraulic damper (60) having one end connected to a hood linkage element (5) and the other end connected to another hood linkage element, which is moved with respect to the hood linkage element (5) during a hood movement, or to a main bearing (7) of the hood (2),
**characterised in that**
end regions (61, 62) of the delaying means (60) are moved, during regular operation of the hood (2), towards each other or away from each other with only little resistance and wherein, in the presence of an external force acting on the hood (2) in a crash and exceeding a defined limit, the delaying means (60) delays a displacement of the hood (2) from its open position towards its closed position against said external force.

9. The hood according to claim 8, **characterised in that** the delaying means (60) is provided as a vibration damper.

## Revendications

1. Capote (2) d'un véhicule cabriolet (1), qui est déplaçable entre une position ouverte et une position fermée au moyen d'une tringlerie de capote (3),
au moins un moyen de blocage (9, 20, 30, 40, 50) étant prévu, qui est disposé sur un élément de tringlerie de capote de ladite tringlerie de capote et qui, en position de blocage, coopère avec un autre élément de tringlerie de capote, qui est déplacé par rapport audit élément de tringlerie de capote lors d'un mouvement de la capote, ou coopère avec un palier principal (7) de la capote (2), ou qui est disposé sur le palier principal de la capote et, en position de blocage, coopère avec un élément de tringlerie de capote, ledit moyen de blocage (9, 20, 30, 40, 50) étant déplaçable entre une position de base et une position de blocage,
le moyen de blocage (9, 20, 30, 40, 50) disposé en position de blocage empêchant un déplacement de la capote (2) vers sa position fermée,
**caractérisée en ce que**
le moyen de blocage (9, 20, 30, 40, 50) est déplacé de la position de base vers la position de blocage lorsqu'une force externe est présente qui agit sur la capote (2) en cas de collision et dépasse une valeur limite donnée.

2. Capote selon la revendication 1, **caractérisée en ce que** le moyen de blocage (9, 30, 40, 50) est en forme de barre et a une première région d'extrémité (12, 33) reliée à un élément de tringlerie de capote (5) de manière à pouvoir tourner autour d'un pivot (11, 32) ou reliée au palier principal (7) de la capote (2), une deuxième région d'extrémité (13, 34) du moyen de blocage (9, 30, 40, 50) opposée à la première région d'extrémité (12, 33) étant pivotée autour du pivot (11, 32) par inertie lorsqu'une force externe est présente qui agit sur la capote (2) et dépasse une valeur limite donnée.

3. La capote selon l'une quelconque des revendications 1 ou 2, **caractérisée en ce que** le moyen de blocage (20) comporte un élément de blocage (21) qui est déplaçable sensiblement en translation, l'élément de blocage (21), en position de blocage, traversant au moins partiellement un évidement (25) d'un élément (26) relié à un élément de tringlerie de capote ou à un palier principal (7).

4. Capote selon l'une quelconque des revendications 1 à 3, **caractérisée en ce que** le moyen de blocage (9, 20, 30, 40, 50) comporte un moyen de retenue (16, 24, 54) par lequel le moyen de blocage (9, 20, 30, 40, 50) disposé en position de blocage est retenu dans cette position de blocage.

5. Capote selon l'une quelconque des revendications 1 à 4, **caractérisée en ce que** le moyen de blocage (50) est disposé dans la région d'un sommet de toit (53) de la capote (2), un élément de blocage (51) du moyen de blocage (50) en position de blocage faisant saillie vers l'avant à partir du sommet de toit (53) dans la direction longitudinale (15) du véhicule.

6. Capote selon l'une quelconque des revendications 1 à 5, **caractérisée en ce que** le moyen de blocage (9, 20, 30, 40, 50) comporte un moyen élastique (10, 23, 37, 52) soumettant respectivement le moyen de blocage (9, 20, 30, 40, 50) ou l'élément de blocage (21, 31, 51) à une force agissant dans la direction de la position de base.

7. Capote selon l'une quelconque des revendications 1 à 6, **caractérisée en ce que** le moyen de blocage (40) est relié à un élément de capote (5, 7) respectif dans la région d'un pivot (6) de la capote (2) et comporte un élément rotatif (42) et un élément de blocage (44), l'élément de blocage (44), en présence d'une force externe agissant sur la capote (2) et dépassant une valeur limite donnée, venant en prise dans l'élément rotatif (42) et empêchant un mouvement rotatif dudit élément rotatif (42).

8. Capote (2) d'un véhicule cabriolet (1), qui est déplaçable entre une position ouverte et une position fermée au moyen d'une tringlerie de capote (3), au moins un moyen retardeur (60) étant prévu sous forme d'un amortisseur hydraulique, ledit amortisseur hydraulique (60) ayant une extrémité reliée à un élément de tringlerie de capote (5) et ayant l'autre extrémité reliée à un autre élément de tringlerie de capote, qui est déplacé par rapport à l'élément de tringlerie de capote (5) pendant un mouvement de capote, ou à un palier principal (7) de la capote (2),
**caractérisée en ce que**
des régions d'extrémité (61, 62) du moyen retardeur (60) se rapprochent ou s'écartent sans résistance ou avec peu de résistance lors d'un fonctionnement régulier de la capote (2), le moyen retardeur (60), en présence d'une force externe qui agit sur la capote (2) en cas de collision et dépasse une valeur limite définée, retardant un déplacement de la capote (2) de sa position ouverte vers sa position fermée à l'encontre de ladite force externe.

9. Capote selon la revendication 8, **caractérisée en ce que** le moyen retardeur (60) est réalisé sous forme d'un amortisseur de vibrations.
